# EUROPEAN PATENT SPECIFICATION

(11) **EP 3 017 886 B1**
(45) Date of publication and mention of the grant of the patent: **26.04.2017**
(21) Application number: 14460084.8
(22) Date of filing: 05.11.2014
(51) Int. Cl.: B09B 5/00, B03B 9/06

(54) **Method of treatment and reducing the mass of landfilled municipal waste.**
Verfahren zur Reduzierung der Masse und Behandlung der Abfällen.
methode de traitement et de reduction de la masse de dechets municipaux.

(43) Date of publication of application: 11.05.2016
(73) Proprietor: Bialowiec, Andrzej Stanislaw, 81-475 Gdynia (PL); Godzwa, Adam, 06-500 Mlawa (PL); Midak, Wlodzimierz Jozef, 01-485 Warszawa (PL); Obrycki, Tomasz Zbigniew, 00-144 Warszawa (PL); Wisniewski, Dariusz, 10-691 Olsztyn (PL)
(72) Inventor: Bialowiec, Andrzej Stanislaw, 81-475 Gdynia (PL); Godzwa, Adam, 06-500 Mlawa (PL); Midak, Wlodzimierz Jozef, 01-485 Warszawa (PL); Obrycki, Tomasz Zbigniew, 00-144 Warszawa (PL); Wisniewski, Dariusz, 10-691 Olsztyn (PL)
(74) Representative: Rzazewska, Dorota

(56) References cited:
- EP-A1- 2 311 785
- WO-A1-2005/120713
- WO-A1-2005/123285
- DE-A1- 19 654 255
- FR-A1- 2 937 263

## Description

The object of the invention is a highly efficient method of treatment municipal waste by sequence of following processes: biological drying - biodrying of mixed municipal waste, mechanically separating solid recovered fuel (SRF) for energy recovery, separating waste for material recycling and biological stabilisation - biostabilisation of biologically degradable waste fractions in order to obtain fuel intended for energy recovery, separation of plastics, metals, paper for material recycling, separation of biologically stabilised fine fraction having properties similar to the compost for use in landfill rehabilitation and environmentally safe storage of stabilised residual waste fraction. The invention relates to a field associated with waste management. Subjecting the municipal waste to successive processes of biodrying, mechanical sorting, biostabilisation and mechanical valorisation allows for achieving, in one technological sequence, a highly efficient mass reduction of municipal waste directed to landfilling through: reducing the mass of waste as a result of water evaporation and decomposition of a portion of organic matter in the process of biodrying, separation of raw materials: plastics, paper, metals by mechanical sorting, separation of solid recovered fuel as a result of mechanical sorting, reducing the mass of waste as a result of decomposition of organic matter in the process of biostabilisation under aerobic conditions and separation of stabilised fine fraction having properties similar to the compost for further use.

Municipal waste constitutes a heterogeneous mixture of many substances and materials. Most often, they are composed of: kitchen waste, plastics, paper, cardboard, textiles, glass, metals, wood, other organic waste and other mineral waste. Also, waste classified as hazardous can be present in a small amount. In a major proportion, in the waste, there are 5 first groups, referred to as morphological ones, which are characterised by organic nature of substances from which they are made. Municipal waste as a mixture is also diversified in terms of fractional composition, i.e. participation of individual size fractions. Typically, three main fractions are distinguished: fine (wherein the particles do not exceed 20 mm), main (wherein the particles have a size of 20 to 60 (100) mm, and coarse (wherein the particles have a size of above 60 (100) mm). It is difficult to accurately distinguish the boundary between the main and coarse fractions, thus depending on the properties of the two fractions, the boundary may be in the range of 60 to 100 mm. All three fractions can be characterised in terms of physicochemical properties. Therefore, the fine fraction is often referred to as heavy or mineral fraction, the composition of which includes mainly mineral materials: sand, ash, stones, fine particles of humus. The main fraction is referred to as organic fraction, the composition of which includes mainly kitchen waste, small plastics, pieces of paper and cardboard, glass, metal particles. The organic fraction is characterised by a high biodegradability. The coarse fraction is often referred to as light or combustible fraction because of a high proportion of materials having low specific density and having high caloric content: plastics, paper, cardboard, textiles. This fraction constitutes also a major source of raw materials for material recycling.

The high content of materials of organic origin in waste may indicate their high potential for energy use. However, due to high humidity of 35 to 55% by mass and a relatively high proportion of non-combustible materials: glass, sand, stones, metals, ash, the municipal waste as a whole is characterised by low calorific value of 3.5 to 7 MJ/kg. This low calorific value does not allow for efficient conducting of the process of thermal treatment of municipal waste. In many countries, technology of thermal treatment of municipal waste has been successfully used. Waste is burned directly in furnaces specially dedicated for this purpose, i.e. grate and fluidised-bed furnaces. Due to the very low calorific value, combustion temperature > 850 °C, required by law, must be artificially maintained by an additional source of fuel. For this reason, systems of this type are not energetically balanced, and therefore, by definition, waste treatment is about waste neutralisation, and not energy recovery. This is, therefore, a process leading to fast thermal stabilisation of waste, and not having any signs of recovery. However, analyzes of properties of municipal waste indicate its high potential for energy use and recycling.

In the field of improving the degree of energy recovery of waste, solutions are known in which, by using methods of mechanical sorting of mixed waste, a light fraction (coarse - with a high proportion of combustible waste) is separated therein, through sieving, the said fraction being subsequently subjected to thorough cleaning by separating metals and other non-combustible parts. Thus prepared material is subjected to size homogenisation into diameters required by the fuel recipient. Often, additives of other organic components which increase the calorific value, such as sawdust, are used. Thus prepared fuel is referred to as Refuse Derived Fuel (RDF), in Polish nomenclature being referred to as a formed, alternative or substitute fuel. This waste handling allows obtaining a material with a high calorific value of 14 to 18 MJ/kg, which, as a fuel, is directed to energy recovery. Thanks to separation and valorisation of combustible fraction, energy use of about 30-40% by mass of waste is possible. The main problem of the thus produced RDF is its high moisture, corresponding to the initial moisture of mixed waste, and therefore being at a level of 35-45%. For this reason, very often, fuel separated in this manner cannot find its recipients. In this technology, after mechanical separation of light fraction, there is still fine and main fraction remained to be managed. Typically, both factions are directed to biological stabilisation. The main objective of this treatment is to reduce susceptibility of organic matter contained mainly in the main fraction to biological decomposition. Main and fine fractions may be stabilised under aerobic conditions (composting, aerobic biostabilisation) and anaerobic conditions (methane fermentation). In both cases, stabilised post-process waste is obtained. Due to high contamination and heterogeneity, this material cannot be considered a high quality compost. It is referred to as stabilised compost. A disadvantage of using only mechanical treatment of waste in order to obtain fuel is obtaining a level of waste mass recovery of 30 to 45% by mass. The remaining part of the waste, particularly the main fraction, after biological stabilisation resulting in a reduction of its mass by about 40%, is generally directed to landfilling. In this case, still 33 to 42% by mass of initial waste remains to be landfilled. The combination of mechanical and biological processes is called mechanical-biological waste treatment.

One of the strategies of managing municipal waste is its mechanical-biological treatment (MBT). MBT is a technique for waste treatment by mechanical and biological methods which are configured for the type of waste treated and for the aims pursued. Due to the legislative conditions, the concept of mechanical-biological treatment (MBT) of waste originates mainly from European experiences, and in particular from countries such as Germany, Italy and Austria.

There are many definitions of the concept of mechanical-biological treatment (MBT) of municipal waste. Currently, the term of mechanical-biological treatment (MBT) of waste represents a variety of techniques and methods of treatment.

Meaning of the words: mechanical-biological waste treatment can be explained as follows: M - "mechanical" includes processes of shredding, sieving, sorting, grading and separating. Processes set in the proper configuration in order to mechanically separate the waste stream into fractions which can be used in whole or in part as a material or into biodegradable fraction suitable for biological treatment; B - "biological" refers to an aerobic or anaerobic biological treatment of biodegradable waste fractions into products similar to the compost, and, when using fermentation, also into biogas; T - "treatment" indicates that mechanical and biological unit processes are integrated and form MBT system.

From the point of view of settings of mechanical and biological treatment processes, two general concepts of MBT can be distinguished. The first option is mechanical-biological treatment (MBT), and thus in the first place, sorting and grading of waste into two fractions, i.e. raw material fraction and biological fraction, occur. The latter goes to aerobic or anaerobic treatment. The second variant is biological-mechanical treatment (BMT). In this case, the waste is first subjected to biological drying, and subsequently it is sorted into raw material fraction, combustible fraction and fraction intended to be landfilled.

Adani et al. (2004) presented the concept of mechanical-biological treatment of waste as four technological concepts which constitute a combination of mechanical, biological and thermal processes:
- mechanical processes for separating material streams (SMS) - In SMS processes, highly caloric combustible fractions and other valuable fractions of material recycling are separated from the waste. Fraction low in calories obtained from residual waste is treated by biological methods leading to mineralisation and synthesis of humic substances, and consequently to landfilling,
- biological and mechanical processes with stabilisation and biodrying (MBT) - used for thermal utilisation of carbon contained in waste, particularly the biodegradable type, and for production of fraction with a higher calorific value, obtained as a result of biodrying. This fraction is an alternative fuel. A degree of waste dryness is a prerequisite for effective separation of the stream into combustible, materially valuable and neutral fractions,
- mechanical-physical stabilisation (MPS) with thermal drying - ensuring complete utilisation of organic carbon as a fraction of alternative fuel. The waste is dried by energy produced from burning fossil fuels or biogas - waste autoclaving may be an example thereof,
- mechanical-biological treatment of residual waste as a pre-treatment prior to thermal conversion or landfilling of waste.

MBT processes according to Bernat et al. (2011) are divided into the following categories:
- Aerobic MBT - these represent technologies which prepare materials for recycling and/or for alternative fuel production; organic fraction stabilised by biological methods is intended for land rehabilitation of, among others, landfills;
- Anaerobic MBT - these technologies prepare material for recycling and/or for using component of substitute fuel , biogas is produced, and stabilised organic fraction is intended for landfilling;
- Anaerobic MBT with aerobic stabilisation of organic fraction separated after fermentation;
- Biological drying as a method for preparing substitute fuel from residual waste.

With a view to the purpose of implementation of the mechanical-biological treatment of municipal waste, eight most frequently used options are distinguished (Table 1).

In case of non-selective collection of municipal waste, it is necessary to use mechanical separation techniques. Mechanical separation techniques allow separation, from mixed waste, of biowaste stream, substitute fuel fraction (RDF) and secondary raw materials. For sieving municipal waste, different types of sieves which are used for initial classification of waste in terms of its grain size are used. On the sieves, the following are separated: substitute fuel fraction (RDF), organic fraction with a high content of easily degradable substance and fine fraction with a low content of organic material, the so-called ballast. Ballistic separation is a technique which allows separation, from the mass of mixed waste, of substitute fuel fraction (RDF). Ballistic separators are also used to separate, from the stream of mixed waste, biowaste, the contamination of which is lower than in biowaste separated by sieving. The most popular systems for segregation of materials are: magnetic separation for separating ferromagnetics, Eddy current separation for recovery of non-ferrous metals, airflow separation for separating highly caloric light fraction, optical separation for separating plastics, including polypropylene (PP), polyethylene (PE), polyvinyl chloride (PVC) and paper, cardboard, wood, glass.

**Table 1. Fundamental objectives and components of MBT system**

| **Type of MBT option** | **Objective of MBT option** |
|---|---|
| Stabilisation of waste prior to their landfilling | reduction of biodegradability of municipal waste and recovery of part of secondary raw materials |
| Production of compost from the waste | obtaining a material having properties of the compost and recovery of part of secondary raw materials |
| Production of compost not satisfying the requirements | obtaining a material having properties similar to those of the compost and recovery of part of secondary raw materials |
| Production of RDF | production of alternative fuel from light fraction of the waste and recovery of part of secondary raw materials |
| Production of SRF in the process of biodrying | production of alternative fuel from light and organic fraction of the waste and recovery of part of secondary raw materials |
| Assisting in thermal neutralisation of waste | increase in the calorific value of the waste directed to the system of thermal neutralisation of waste and recovery of part of secondary raw materials |
| Production of biogas | production and energy recovery of biogas produced in anaerobic conditions and recovery of part of secondary raw materials |
| Production of biogas and compost not satisfying the requirements | production and energy recovery of biogas produced in anaerobic conditions, obtaining, from fermentation residue, a material having properties similar to those of the compost and recovery of part of secondary raw materials |

In addition, more and more often, in order to increase the efficiency of separation of biodegradable waste from raw materials, a percolative method is used, as a result of which degradable organic compounds dissolve in water. Perlocative water, rich in organic matter, is processed biologically, typically anaerobically in order to produce biogas. Additionally, water is the medium of density separation of various morphological groups of waste. Kitchen waste, plastic, paper float, and objects with a higher specific weight than water sedimentate.

As biological treatment processes, biological stabilisation under aerobic conditions, biological stabilisation under anaerobic conditions and biodrying are used individually and in sequential configurations. Each of these biological processes, depending on the construction of reactor, flow of waste stream, waste moisture, process temperature, is divided into a number of different types.

Configuration choice of mechanical and biological treatment of municipal waste depends on many factors, including: properties of municipal waste, required levels of recovery and recycling, limits on the properties of landfilled waste and possibilities of using final products of MBT.

Deciding on the choice of appropriate MBT/BMT technology may, in principle, be reduced to a choice among four general options: A - focus on the production of biogas and its energy use, B - focusing the changes on the production of stabilised material for the purpose of improving the structure of humus soil, C - focusing on the production of highly calorific substitute fuel, D - configuration of processes in order to obtain material biologically stabilised to the maximum possible extent, directed to the final landfilling.

Typically, during the processes of MBT, raw materials such as metals, glass, soil, plastics are separated, as if as a byproduct, as a result of positive segregation, and also hazardous materials and ballast (useless and disturbing materials usually directed to landfilling) as a result of negative segregation. The use of MBT results in the separation of the main stream of municipal waste into 4 more homogeneous, smaller streams of waste, which generates an increase in utility values of the waste treated. Separate streams of waste can be used as follows: A - biogas: generation of electrical and thermal energy in independent or cogeneration systems, generation of superheated steam for industrial purposes, enrichment of landfill gas or synthesis gas from gasification of other waste, production of enriched fuel for transport purposes. B - compost-like products: use in agricultural production, use in forestry production, use in production of energy crops, used to improve soil structure and water retention, use in the cultivation of flowering plants, use in domestic gardens, production of liquid fertilisers, use as landfill reclamation layer, use in landscaping, use in forming infrastructure sites for the construction of roads and motorways, use in reclamation of degraded areas. C - alternative fuel: co-combustion with conventional fuels in heat plants and combined heat and power plant, used as the main fuel in heat plants and combined heat and power plants, used as a fuel in cement plants, use as a fuel for other industrial purposes, thermal treatment in waste incineration plants, gasification, D - stabilised compost: use for process purposes in the landfill for forming intermediate layers and covering the waste dump, landfilling in the landfill after MBT.

Secondary raw materials, separated during MBT, are usually subjected to recycling, and hazardous waste and ballast are directed to neutralisation by landfilling. The data shown indicate that there is a large variety of individual solutions and possible configurations. According to the applicants, the market lacks technology - configuration of MBT process, which would maximise the fulfilment of the primary objective of MBT. The objective of using MBT of communal waste is to reduce the environmental impact associated with the landfilling of biodegradable waste and to obtain additional benefits from obtaining secondary raw materials from waste, producing compost, biogas or highly calorific alternative fuel. Achievement of this objective should consist in maximising the efficiency of processes leading to the generation of high-energy fuel, the separation of part of raw materials and maximising biostabilisation efficiency of biodegradable waste in order to maximise, as a consequence, the mass reduction of landfilled waste.

To achieve this objective, a technological sequence of the process must be configured through the use of: biodrying of municipal waste, mechanical separation of metals, mechanical screening out the dried oversize fraction, separating raw materials from it and producing high-energy SRF fuel, subjecting the main fraction to biological stabilisation, and after the completion of the stabilisation process, size valorisation in order to separate fine fraction having properties similar to compost, intended for subsequent use, e.g. for landfill reclamation and separation of stabilised compost, intended for environmentally safe landfilling.

International Patent Application WO2005120713 A1 relates to a method and a device for treatment and disposal of waste and mixture thereof in several steps. The waste is dried, mineral substances with a grain size of less than 75mm are sieved, segregation - separation of waste suitable for recycling, then recovery of ferrous and non-ferrous metals, followed by shredding to a size of 150 mm or less and another recovery of metals. Then, it is dried again to a moisture of 18+/-2 %, mineral contaminants are separated and shredded to a size of 50 mm or less, followed by another recovery of metals. The remaining organic waste is compacted and briquetted. Then, it is directed to gasification, as a result of which the obtained gas is directed to generate energy.

U.S. Patent Application US20140134694 A1 relates to a method for treatment of mixed solid waste containing at least 10% of wet organic waste and at least 10% of dry organic waste. The method includes separating wet organic waste from dry organic waste with the use of at least one mechanical separator and its treatment, the separator comprising a shredder, a size separator, a density separator or a combination thereof. A feature of the method is that less than 40% of mixed waste is separated manually. Wet organic waste is subjected to dry and wet fermentation, as a result of which biogas is obtained processed into liquid fuel. From dry organic waste, solid fuel (RDF) is obtained.

International Patent Application WO2005123285 A1 relates to a method and a system for a complete recycling of municipal solid waste with minimal effect on the environment and with exploitation of obtained solid fuel from waste processing to produce electricity and/or hydrogen.

Polish Patent Application P 393 510 A1 relates to a method for producing RDF and SRF fuels from municipal waste in one technological sequence. Mixed waste is shredded and sieved. Oversize fraction is directed to mechanical thorough cleaning and production of RDF, recovery of metals. Undersize fraction is directed to biodrying, followed by mechanical thorough cleaning, and then obtaining SRF fuel, recovery of metals, and mineral residue is landfilled or used.

Polish Patent Application P 401 657 A1 relates to a set of technological line for recycling waste and a method for recovering useful raw materials.

Patent PL 185 529 discloses a method for treating waste or residual waste in which the waste is treated biologically, or mechanically and biologically, and separation and shredding are used, wherein the waste is stabilised in a closed container in conditions of forced ventilation, after which the waste is sorted into fractions containing a material of low density and a fraction containing a material of high density, which is crushed selectively, wherein the brittle constituents of this fraction are shredded, and components such as wood or plastic are left unshredded, and then the crushed fraction is separated (sieved) selectively into two fractions. The object of the invention is also a system for treatment of waste or residual waste.

In the technology claimed, in a technological sequence, mass loss occurs in 2 locations: in the process of biodrying and in the process of biostabilisation of undersize fraction. In the first step, biodrying, the mass loss is a result of removal of part of the water and a result of decomposition of part of the organic matter. The main objective of biodrying is drying and partial stabilisation of municipal waste as a result of biological processes taking place. Thereby, systems which use biodrying can produce high quality solid recovered fuel (SRF) with a high calorific value. The waste is dried mainly by convection of heat with the air flowing, as well as due to the heat generated during aerobic biological transformations. Despite this technology evolutionally deriving directly from composting processes, its main objective is to dry the waste, while also possibly maintaining to the highest possible extent the organic matter in an undecomposed state while in composting, the processes are mainly aimed at biological stabilisation of organic matter. Commercial technologies currently used allow, within 5-15 days, as a result of biodrying, reduction of charge mass by 25 to 35% by mass. The main products of transformations, in addition to post-process waste mass with a moisture of less than 30%, include water vapour and CO₂. Inside the bioreactor, thermal energy resulting from aerobic biological transformations of easily degradable organic matter combined with a high air exchange cause drying of the waste. It should be emphasised that, by assumption, the main objective is to dry the waste and produce solid recovered fuel (SRF) having good calorific properties for further thermal treatment processes, as an alternative energy source.

The main objective of biodrying is to obtain, within the shortest time, high-quality solid recovered fuel with the participation of biological processes. This is achieved by: increasing the calorific value by reducing the water content in the waste, as well as reducing complete biochemical decomposition of organic matter. In addition, the resulting dried material is easier to process in subsequent mechanical processes. It is emphasised that, as a result of drying, the material is stable and convenient for short-term storage and transport. Because of the thermophilic temperatures of the process, a partial hygienisation of the material also occurs. Available technologies of waste biodrying use bioreactors supplied only with shredded fraction of unsorted waste. Then, the dried product is subjected to intensive mechanical processes in order to obtain ferrous and non-ferrous metals, to separate highly calorific fraction, paper, plastics and undersize fraction. Due to the high degree of drying, undersize fraction does not undergo significant biological transformations, but it cannot be landfilled in such a form because it is not completely stabilised. For this reason, the next step in which the mass loss occurs is biological stabilisation of the undersize fraction, which remains after the process of biodrying and is mechanically separated. The objective of the aerobic biostabilisation is to reduce the organic matter content biologically degradable in the waste mass to a degree at which the activity of microorganisms is reduced to a minimum, which may be expressed as obtaining respiratory activity (AT₄) below 10 mgO₂/g d.m. The efficiency of mass loss as a result of decomposition of organic matter depends on the properties of the waste, and particularly on moisture, and values of 30 to 50% of input material are assumed. Moisture of biologically stabilised organic material should not be lower than 30%, due to the inhibition of microbial activity. Therefore, the process of biodrying should be configured so as to maintain appropriate amount of water for microorganisms in a subsequent process of biostabilisation.

The use of biodrying technology allows an increase in the effectiveness of SRF production as compared to the mechanical separation of RDF. The amount of SRF can constitute 40-45% of waste mass. The amount of waste going to the landfill is also smaller due to the fact that water in an amount of 25-35% of waste mass is removed from the waste. In addition, separation of charge as a result of mechanical processing of the raw material waste in an amount of about 5% and reduction of undersize fraction by 25% and additional sieving the fine fraction having properties of the compost result in that only about 20-25% of initial waste mass in the form of stabilised compost remains to be landfilled. In the present patent application, it is proposed to use an innovative combination, in one technological sequence, of the process of biodrying, mechanical sorting, aerobic biostabilisation and mechanical valorisation of stabilised undersize fraction in order to: produce high-energy SRF, separate raw materials, produce material having properties similar to the compost, minimise landfilled water part as a result of evaporation and decomposition of organic matter, which leads to obtaining stabilised waste intended for environmentally safe landfilling.

The object of the invention is a method of treatment and reducing the mass of landfilled municipal waste in one technological sequence, comprising the steps of waste shredding, biodrying, biostabilisation and separation of combustible SRF fraction, characterised in that:
- the main waste stream goes to the waste treatment system; where
- after initial shredding to a grain size of not more than 300 mm, the waste is subjected to the process of biodrying, in reactors with active aeration with an air flow in the range of 0.003-0.2 kg of air per kilogram of waste per hour, over a period not longer than 10 days, until obtaining a moisture of the waste of not less than 28%;
- then, the waste stream is subjected to separation of metals through the use of magnetic and eddy current separators; and then
- the waste is separated mechanically on a sieve with a mesh size of not less than 80 mm into two streams: oversize fraction and undersize fraction which are subjected to further processing so that the oversize fraction is in the first place directed to manual sorting where plastic and paper intended for material recycling are separated, then the remaining oversize fraction is processed into SRF with a calorific value in the range of 16 to 23 MJ/kg and a fragmentation of no more than 30 mm, and the undersize fraction separated on the sieve is subjected to the process of aerobic biostabilisation in reactors with active aeration with an air flow in the range of 0.0006-0.02 kg of air per kilogram of waste per hour, over a period not shorter than 14 days, with transferring by means of a loader, until obtaining organic matter content in the waste, expressed as ignition loss of less than 35% d.m., or as total organic carbon of less than 20 % d.m., or respiratory activity AT4 of less than 10 mgO₂/g d.m.;
- and then by means of a sieve with a mesh size of 20 mm, fine undersize fraction with a grain size < 20 mm, having properties similar to the compost, intended for recovery, and oversize fraction with a grain size >20 mm, intended to be landfilled, are separated from the obtained stabilised compost.

Preferably, aeration in the process of biodrying is continuous or intermittent.

Preferably, aeration in the process of biostabilisation is continuous or intermittent.

The use of the proposed method of treatment and reducing the mass of landfilled municipal waste in one technological sequence, as compared to existing technologies, allows an increase in the recovery efficiency by generating high quality SRF and separation of raw materials, as well as mass reduction in landfilled waste by reducing water content and organic matter in the waste and separation of high quality SRF and raw materials from the waste.

In the case of traditional mechanical methods of RDF production, the fuel produced constitutes about 30-45% of the initial waste mass. The residual waste is not stabilised and in the case of landfilling causes considerable inconvenience. In the proposed solution, the amount of SRF can constitute 40-45% of waste mass. The amount of waste going to the landfill is also smaller due to the fact that water in an amount of 25-35% of waste mass is removed from the waste. In addition, separation of charge as a result of mechanical processing of the raw material waste in an amount of about 5% and reduction of undersize fraction by 25% and additional sieving the fine fraction having properties of the compost result in that only about 20-25% of initial waste mass in the form of stabilised compost remains to be landfilled. By using the technology proposed, it is possible to reduce, by about 75-80%, the mass of landfilled waste. Energy use of the fuel produced can also increase the share of renewable energy in total energy production in the country.

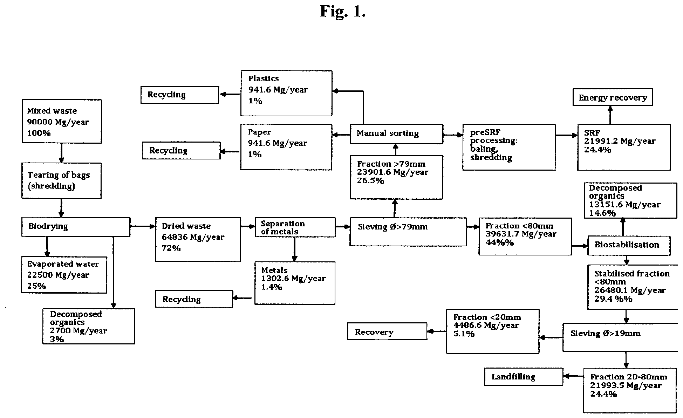

The invention is shown in the drawing in which Fig. 1 shows a diagram of a technology for processing mixed municipal waste.

### Example

The invention proposed is a method of treatment and reducing the mass of landfilled municipal waste in one technological sequence, the result of which is an increase in quantitative and qualitative, and economic effectiveness of the process of waste treatment, wherein environmental requirements are met. The invention can be implemented in a system for treating municipal waste. In the present application, as an exemplary use of the invention, configuration and calculation for a system with a throughput of 90 000 Mg/year in which municipal waste with fractional and morphological composition shown in Table 2 is treated.

**Table 2. Morphological composition of individual size fractions of mixed municipal waste intended to be treated.**

| Grain size of fraction mm | Fractiona l composit ion % | Morphological composition % | | | | | | | | | | | |
|---|---|---|---|---|---|---|---|---|---|---|---|---|---|
| | | plant food | anim al food | paper | plastics | textiles | glass | metals | other orga nic | other miner al | hazar dous | other | Total |
| >100 | 23.0 | 0.0 | 0.0 | 52.0 | 30.7 | 2.5 | 5.8 | 5.7 | 2.7 | 0.0 | 0.5 | 0.0 | 100.0 |
| 80-100 | 15.6 | 11.3 | 0.0 | 34.7 | 23.7 | 0.2 | 9.2 | 1.1 | 7.3 | 12.5 | 0.0 | 0.0 | 100.0 |
| 60-80 | 9.8 | 17.9 | 0.0 | 30.2 | 28.2 | 1.5 | 9.3 | 6.1 | 5.6 | 1.3 | 0.0 | 0.0 | 100.0 |
| 40-60 | 16.7 | 29.5 | 2.1 | 25.7 | 15.5 | 1.6 | 7.6 | 3.4 | 9.9 | 2.3 | 2.4 | 0.0 | 100.0 |
| 20-40 | 18.4 | 49.9 | 3.1 | 13.9 | 4.3 | 0.5 | 6.0 | 1.4 | 17.3 | 3.6 | 0.0 | 0.0 | 100.0 |
| 10-20 | 9.2 | 0.0 | 0.0 | 0.0 | 0.0 | 0.0 | 0.0 | 0.0 | 0.0 | 0.0 | 0.0 | 100.0 | 100.0 |
| <10 | 7.4 | 0.0 | 0.0 | 0.0 | 0.0 | 0.0 | 0.0 | 0.0 | 0.0 | 0.0 | 0.0 | 100.0 | 100.0 |
| Total | 100.0 | 18.4 | 0.9 | 26.4 | 16.9 | 1.3 | 6.6 | 2.4 | 6.7 | 2.9 | 0.6 | 16.8 | 100.0 |

Waste moisture is assumed to be at a level of 52%, and apparent density of 0.244 Mg/m³. Before placing the waste in reactors, it is subjected to a process of initial shredding. As a result of biodrying process, due to water evaporation and decomposition of organic matter, the waste mass of 90000 Mg/year will be reduced by 28%, and the dried waste in the amount of 64836.0 Mg/year will be characterised by morphological composition shown in Table 3. The calculated mass of the dried waste is further directed to mechanical and manual sorting in order to separate secondary raw materials: plastics, paper, metals, and to produce alternative fuel SRF.

In the first place after biodrying, metal separators are designed. It was calculated that, in total, within a year, 1302.6 Mg of metals will be separated, which constitute about 2.1% of the dried waste mass which is directed to recycling. After separation of metals, the dried waste will be characterised by morphological composition which is shown in Table 4.

**Table 3. Morphological composition of individual size fractions of mixed municipal waste after the biodrying process.**

| Grain size of fraction mm | Fraction al composit ion % | Morphological composition % | | | | | | | | | | | |
|---|---|---|---|---|---|---|---|---|---|---|---|---|---|
| | | plant food | anim al food | paper | plastics | textiles | glass | metals | other orga nic | other mine ral | hazar dous | other | Total |
| >100 | 24.7 | 0.0 | 0.0 | 40.5 | 39.7 | 2.1 | 7.6 | 7.4 | 2.1 | 0.0 | 0.7 | 0.0 | 100.0 |
| 80-100 | 17.1 | 8.6 | 0.0 | 26.6 | 30.1 | 0.2 | 11.7 | 1.3 | 5.6 | 15.9 | 0.0 | 0.0 | 100.0 |
| 60-80 | 10.7 | 13.8 | 0.0 | 23.3 | 36.1 | 1.2 | 11.8 | 7.8 | 4.3 | 1.6 | 0.0 | 0.0 | 100.0 |
| 40-60 | 16.8 | 24.4 | 1.8 | 21.3 | 21.4 | 1.4 | 10.4 | 4.7 | 8.2 | 3.2 | 3.3 | 0.0 | 100.0 |
| 20-40 | 16.9 | 45.4 | 2.8 | 12.6 | 6.4 | 0.5 | 9.1 | 2.1 | 15.7 | 5.4 | 0.0 | 0.0 | 100.0 |
| 10-20 | 7.7 | 0.0 | 0.0 | 0.0 | 0.0 | 0.0 | 0.0 | 0.0 | 0.0 | 0.0 | 0.0 | 100.0 | 100.0 |
| <10 | 6.2 | 0.0 | 0.0 | 0.0 | 0.0 | 0.0 | 0.0 | 0.0 | 0.0 | 0.0 | 0.0 | 100.0 | 100.0 |
| Total | 100.0 | 14.7 | 0.8 | 22.7 | 23.5 | 1.0 | 8.4 | 4.0 | 6.0 | 4.3 | 0.7 | 13.8 | 100.0 |

As a result of sieving the dried mixed municipal waste, after separation of metals, through a sieve with a mesh size of at least 80 mm, separation of the waste into two separate streams will occur:
- Oversize fraction, > 80 mm, light, intended for manual sorting in order to separate plastics and paper and for producing SRF, in a separate sequence of mechanical treatment,
- Undersize fraction, < 80 mm, heavy, with a high content of degradable organic matter, intended for biostabilisation, and then in part for recovery, and in part for landfilling as a stabilised waste.

**Table 4. Morphological composition of individual size fractions of mixed municipal waste after the processes of biodrying and metal separation.**

| Grain size of fraction mm | Fractiona l composit ion % | Morphological composition % | | | | | | | | | | | |
|---|---|---|---|---|---|---|---|---|---|---|---|---|---|
| | | plant food | anim al food | paper | plastics | textiles | glass | metals | other orga nic | other mine ral | hazar dous | other | Total |
| >100 | 24.2 | 0.0 | 0.0 | 42.0 | 41.3 | 2.2 | 7.8 | 3.8 | 2.2 | 0.0 | 0.7 | 0.0 | 100.0 |
| 80-100 | 17.3 | 8.7 | 0.0 | 26.7 | 30.3 | 0.2 | 11.8 | 0.7 | 5.6 | 16.0 | 0.0 | 0.0 | 100.0 |
| 60-80 | 10.5 | 14.3 | 0.0 | 24.3 | 37.6 | 1.3 | 12.3 | 4.0 | 4.5 | 1.7 | 0.0 | 0.0 | 100.0 |
| 40-60 | 16.8 | 25.0 | 1.8 | 21.8 | 21.9 | 1.5 | 10.7 | 2.4 | 8.4 | 3.3 | 3.3 | 0.0 | 100.0 |
| 20-40 | 17.1 | 45.8 | 2.8 | 12.8 | 6.5 | 0.5 | 9.2 | 1.1 | 15.9 | 5.4 | 0.0 | 0.0 | 100.0 |
| 10-20 | 7.8 | 0.0 | 0.0 | 0.0 | 0.0 | 0.0 | 0.0 | 0.0 | 0.0 | 0.0 | 0.0 | 100.0 | 100.0 |
| <10 | 6.3 | 0.0 | 0.0 | 0.0 | 0.0 | 0.0 | 0.0 | 0.0 | 0.0 | 0.0 | 0.0 | 100.0 | 100.0 |
| Total | 100.0 | 15.0 | 0.8 | 23.2 | 24.0 | 1.0 | 8.6 | 2.1 | 6.1 | 4.4 | 0.7 | 14.1 | 100.0 |

It was calculated that the oversize fraction will be characterised by morphological and fractional composition shown in Table 5.

**Table 5. Morphological composition of the fraction > 80 mm separated from mixed municipal waste after the processes of biodrying and metal separation**

| Grain size of fraction mm | Morphological composition % | | | | | | | | | | |
|---|---|---|---|---|---|---|---|---|---|---|---|
| | plant food | animal food | paper | plastics | textiles | glass | metals | other organic | other mineral | hazardous | other |
| >80 | 4.0 | 0.0 | 39.4 | 40.5 | 1.5 | 0.0 | 2.8 | 4.0 | 7.4 | 0.5 | 0.0 |

It was demonstrated that, as a result of sieving the dried mixed municipal waste, 36.9 % of the mass will be constituted by the oversize fraction, and 61 % - the undersize fraction. The oversize fraction will be separated in the amount of about 23901.6 Mg/year.

In order to obtain part of plastics and paper for recycling in a technological sequence, manual sorting cabin is activated, where workers sort plastics and paper with an efficiency of about 10% of the mass of these materials contained in the oversize fraction. 941.6 Mg of paper and 968.9 Mg of plastics will be sorted. These materials will be pressed and directed to recycling. After the process of manual sorting, the oversize fraction will be characterised by morphological composition shown in Table 6.

**Table 6. Morphological composition of the fraction > 80 mm separated from mixed, dried municipal waste after the processes of manual drying and metal separation**

| Grain size of fraction mm | Morphological composition % | | | | | | | | | | |
|---|---|---|---|---|---|---|---|---|---|---|---|
| | plant food | animal food | paper | plastics | textiles | glass | metals | other organic | other mineral | hazardous | other |
| >80 | 4.3 | 0.0 | 38.5 | 39.7 | 1.6 | 0.0 | 3.0 | 4.3 | 8.0 | 0.5 | 0.0 |

The oversize fraction, after separation of paper and plastics, will be directed to baling and storage in the amount of 21991.2 Mg. Since the oversize fraction is rich in combustible materials, it is used energetically directly or after preparation of SFR from it in the same or other system. In Table 7, expected morphological and fractional composition of the undersize fraction with a grain size < 80 mm is shown.

**Table 7. Morphological composition of the fraction < 80 mm separated from mixed municipal waste after the processes of biodrying and metal separation**

| Grain size of the fraction mm | Fractional composition % | Morphological composition % | | | | | | | | | | | |
|---|---|---|---|---|---|---|---|---|---|---|---|---|---|
| | | plant food | animal food | paper | plastics | textiles | glass | metals | other organi c | other mine ral | hazar dous | other | Total |
| 60-80 | 18.9 | 12.7 | 0.0 | 21.6 | 33.4 | 1.1 | 22.1 | 3.6 | 4.0 | 1.5 | 0.0 | 0.0 | 100.0 |
| 40-60 | 29.0 | 23.2 | 1.7 | 20.2 | 20.3 | 1.4 | 17.2 | 2.2 | 7.8 | 3.0 | 3.1 | 0.0 | 100.0 |
| 20-40 | 29.5 | 42.6 | 2.6 | 11.9 | 6.0 | 0.4 | 15.7 | 1.0 | 14.8 | 5.0 | 0.0 | 0.0 | 100.0 |
| 10-20 | 12.5 | 0.0 | 0.0 | 0.0 | 0.0 | 0.0 | 0.0 | 0.0 | 0.0 | 0.0 | 0.0 | 100.0 | 100.0 |
| <10 | 10.1 | 0.0 | 0.0 | 0.0 | 0.0 | 0.0 | 0.0 | 0.0 | 0.0 | 0.0 | 0.0 | 100.0 | 100.0 |
| Total | 100.0 | 21.7 | 1.3 | 13.4 | 14.0 | 0.7 | 13.8 | 1.6 | 7.4 | 2.6 | 0.9 | 22.6 | 100.0 |

Based on performed calculations, it is predicted that the amount of dried main fraction having a grain size of <80 mm will be about 39631,7 Mg/year, which constitutes 44% of the initial mass of mixed municipal waste.

The undersize fraction is directed to the biostabilisation process in order to remove the excess of organic matter. It was assumed that 50% of biodegradable waste will be removed. Morphological and fractional composition of stabilised undersize fraction is listed in Table 8.

**Table 8. Morphological composition of the biologically stabilised fraction < 80 mm separated from mixed municipal waste after the processes of biodrying and metal separation**

| Grain size of the fraction mm | Fraction al composit ion % | Morphological composition % | | | | | | | | | | | |
|---|---|---|---|---|---|---|---|---|---|---|---|---|---|
| | | plant food | anim al food | paper | plastics | textiles | glass | metals | other organi c | other mine ral | hazar dous | other | Total |
| 60-80 | 9.5 | 7.9 | 0.0 | 13.3 | 41.3 | 1.4 | 27.3 | 4.4 | 2.5 | 1.9 | 0.0 | 0.0 | 100.0 |
| 40-60 | 13.3 | 15.8 | 1.1 | 13.7 | 27.6 | 1.8 | 23.3 | 3.0 | 5.3 | 4.1 | 4.2 | 0.0 | 100.0 |
| 20-40 | 11.8 | 33.2 | 2.1 | 9.3 | 9.4 | 0.7 | 24.4 | 1.5 | 11.5 | 7.9 | 0.0 | 0.0 | 100.0 |
| 10-20 | 3.9 | 0.0 | 0.0 | 0.0 | 0.0 | 0.0 | 0.0 | 0.0 | 0.0 | 0.0 | 0.0 | 100.0 | 100.0 |
| <10 | 3.1 | 0.0 | 0.0 | 0.0 | 0.0 | 0.0 | 0.0 | 0.0 | 0.0 | 0.0 | 0.0 | 100.0 | 100.0 |
| Total | 100.0 | 16.2 | 0.9 | 10.1 | 20.9 | 1.1 | 20.6 | 2.4 | 5.5 | 4.0 | 1.3 | 16.9 | 100.0 |

The mass of the obtained stabilised compost is reduced by sieving the fine fraction <20 mm - compost not complying with the requirements. The mass of the fraction <20 mm will be, according to the assumptions made, 4486.6 Mg/year. After sieving the fine fraction, the stabilised compost with a grain size of 20-80 mm, is directed to be landfilled in the amount of 21993.5 Mg/year, which constitutes 24.4% of the initial mass of municipal waste.

The invention - a highly efficient method of treatment and reducing the mass of landfilled municipal waste in one technological sequence can be implemented is systems for treatment of municipal waste, and in particular in so-called Regional Municipal Waste Treatment Installations (RMWTI). From a technological point of view, there is not any lower or upper limit of the throughput of such a system, however, from an economic and logistical point of view, it is recommended that system of this type have a capacity of at least 35000 Mg/year. The final product, fuel, should be directed to energy recovery, wherein SFR with a high calorific value can be used on an industrial scale in the cement industry and commercial power industry. The separated secondary raw materials should be directed to material recycling. On the other hand, the stabilised fine fraction, as a compost not complying with the requirements, should be used e.g. for landfill reclamation. Masses of municipal waste produced in Poland - about 10 mln Mg/year allow industrial implementation of the proposed technology.

### References:

*1)* Bernat K., Wojnowska-Baryla I, Kasiński S., Agopsowicz M.: Technologie i biotechnologie stosowane w mechaniczno-biologicznym przetwarzaniu odpadów komunalnych. Trendy w Biotechnologii Środowiska. Cz. II.
*2)* Pretz T.H., Onasch K.J. 2003. Mechanical processing of municipal solid waste with modern sorting technologies. Ninth International Waste Management and Landfill Symposium in Sardinia, 6 - 10 October 2003*.*
*3)* Crow C., Kenny G.R. 1997. New Challenges developments in plastic sorting. R'97 International Congress. Recovery Recycling Re-integration. Geneva, Switzerland. February 4 - 71997*.*
*4)* Archer E., Baddeley A., Klein A., Schwager J., Whiting K., 2005. Mechanical-Biological-Treatment : A Guide for Decision Makers Processes, Policies & Markets. Juniper Consultancy Services Ltd, March 2005*.*
*5)* Müller W., Niesar M., Turk T. 2003. Optimized mechanical treatment and material segregation through ballistic separation within mechanical biological waste treatment. Ninth International Waste Management and Landfill Symposium in Sardinia, 6 - 10 October 2003*.*

## Claims

1. A method of treatment and reducing the mass of landfilled municipal waste in one technological sequence, comprising the steps of waste shredding, biodrying, biostabilisation and separation of combustible SRF fraction, **characterised in that**:
- the main waste stream goes to the waste treatment system; where
- after initial shredding to a grain size of not more than 300 mm, the waste is subjected to the process of biodrying, in reactors with active aeration with an air flow in the range of 0.003-0.2 kg of air per kilogram of waste per hour, over a period not longer than 10 days, until obtaining a moisture of the waste of not less than 28%;
- then, the waste stream is subjected to separation of metals through the use of magnetic and inductive separators; and then
- the waste is separated mechanically on a sieve with a mesh size of not less than 80 mm into two streams: oversize fraction and undersize fraction which are subjected to further processing so that the oversize fraction is in the first place directed to manual sorting whereplastic and paper intended for material recycling are separated, then the remaining oversize fraction is processed into SRF with a calorific value in the range of 16 to 23 MJ/kg and a fragmentation of no more than 30 mm, whereas the undersize fraction separated on the sieve is subjected to the process of aerobic biostabilisation in reactors with active aeration with an air flow in the range of 0.0006-0.02 kg of air per kilogram of waste per hour, over a period not shorter than 14 days, with transferring by means of a loader, until obtaining organic matter content in the waste, expressed as ignition loss of less than 35% d.m., or as total organic carbon of less than 20 % d.m., or respiratory activity AT4 of less than 10 mgO₂/g d.m.;
- and then by means of a sieve with a mesh size of 20 mm, the fine undersize fraction with a grain size < 20 mm, having properties similar to the compost, intended for recovery, and oversize fraction with a grain size >20 mm, intended to be landfilled, is separated from the obtained stabilised compost.

2. The method according to claim 1, **characterised in that** in the process of biodrying the aeration is continuous or intermittent.

3. The method according to claim 1, **characterised in that** in the process of biostabilisation the aeration is continuous or intermittent.

## Patentansprüche

1. Verfahren zur Behandlung und Verminderung der Masse von deponierten kommunalen Abfällen in einer technologischen Abfolge, umfassend die Schritte von Abfallzerkleinerung, Biotrocknen, Biostabilisierung und Abtrennung von brennbaren SRF-Fraktionen, **dadurch gekennzeichnet, dass**:
- der Hauptabfallstrom in die Abfallbehandlungssystem geht; wobei
- nach anfänglichen Zerkleinerung auf eine Korngröße von nicht mehr als 300 mm, die Abfälle auf den Prozess der Biotrocknen, in Reaktoren mit aktiver Belüftung mit einem Luftstrom im Bereich von 0.003 bis 0.2 kg Luft pro kg Abfall pro Stunde unterzogen werden, über einen Zeitraum von nicht mehr als 10 Tage, bis eine Feuchtigkeit von der Abfälle von nicht weniger als 28% erhalten wird;
- dann der Abfallstrom der Abtrennung von Metallen durch die Verwendung von magnetischen und induktiven Separatoren unterworfen wird; und dann
- der Abfall mechanisch auf einem Sieb mit einer Maschengröße von nicht weniger als 80 mm in zwei Ströme getrennt wird: Grobkornfraktion und Unterkornfraktion, die einer weiteren Verarbeitung unterzogen werden, so dass Grobkornfraktion zunächst auf die manuelle Sortierung gerichtet ist, wo Kunststoff und Papier für die Materialrecycling abgetrennt werden, dann wird der verbleibende Grobkornfraktion zu SRF mit einem Heizwert im Bereich von 16 bis 23 MJ/kg und einer Fragmentierung von nicht mehr als 30 mm verarbeitet wird, während die auf dem Sieb abgetrennte Unterkornfraktion dem Prozess der aeroben Biostabilisierung in Reaktoren mit aktiver Belüftung mit einem Luftstrom im Bereich von 0.0006-0.02 kg Luft pro Kilogramm Abfall pro Stunde über einen Zeitraum von nicht weniger als 14 Tagen unterzogen wird, mit Übergabe mittels eines Laders, bis zum Erhalten der Gehalt an organischem Material in den Abfällen, ausgedrückt als Zündverlust von weniger als 35% der Trockenmasse, oder als gesamter organischer Kohlenstoff von weniger als 20% der Trockenmasse oder die Atmungsaktivität AT4 von weniger als 10 mgO₂/g der Trockenmasse;
- und dann mittels eines Siebes mit einer Maschenweite von 20 mm die feine Unterkornfraktion mit einer Korngröße <20 mm, die ähnliche Eigenschaften wie der Kompost hat, für die Rückgewinnung vorgesehene, und eine Grobkornfraktion mit einer Korngröße >20 mm für Deponieren vorgesehene, von dem erhaltenen stabilisierten Kompost getrennt werden.

2. Verfahren nach Anspruch 1, **dadurch gekennzeichnet, dass** im Biotrocknensverfahren die Belüftung kontinuierlich oder intermittierend ist.

3. Verfahren nach Anspruch 1, **dadurch gekennzeichnet, dass** im Biostabilisierungverfahren die Belüftung kontinuierlich oder intermittierend ist.

## Revendications

1. Un procédé de traitement et réduction de la masse de déchets municipaux mis en décharge dans une séquence technologique, comprenant les étapes de déchiquetage des déchets, bioséchage, biostabilisation et séparation de la fraction SRF combustible, **caractérisé en ce que** :
- le flux de déchets principal va au système de traitement des déchets ; où
- après broyage initial jusqu'à une granulométrie ne dépassant pas 300 mm, les déchets sont soumis au processus de bioséchage, dans des réacteurs à aération active avec un flux d'air dans la gamme de 0,003-0,2 kg d'air par kilogramme de déchets par heure, sur une période ne dépassant pas 10 jours, jusqu'à l'obtention d'une humidité des déchets de pas moins de 28% ;
- puis le flux de déchets est soumis à une séparation de métaux par l'utilisation de séparateurs magnétiques et inductifs ; et puis
- les déchets sont séparés mécaniquement, sur un tamis d'un maillage d'au moins 80 mm, en deux flux : une fraction surdimensionnée et une fraction sousdimensionnée qui sont soumises à un traitement ultérieur de sorte que la fraction surdimensionnée est en premier lieu dirigée vers le tri manuel où le plastique et le papier destinés au recyclage matériel sont séparés, puis la fraction surdimensionnée restante est transformée en SRF avec une valeur calorifique dans la gamme de 16 à 23 MJ/kg et une fragmentation de pas plus de 30 mm, tandis que la fraction sousdimensionnée séparée sur le tamis est soumise au procédé de biostabilisation aérobie dans des réacteurs à aération active avec un flux d'air dans la gamme de 0,0006-0,02 kg d'air par kilogramme de déchets par heure, sur une période non inférieure à 14 jours, avec transfert à l'aide d'un chargeur, jusqu'à l'obtention d'une teneur en matière organique dans les déchets, exprimée en perte d'inflammation inférieure à 35% MS, ou en carbone organique total inférieur à 20% MS, ou une activité respiratoire AT4 inférieure à 10 mgO₂/g MS ;
- et puis au moyen d'un tamis d'un maillage de 20 mm, la fraction sousdimensionnée fine avec une taille de grain < 20 mm, ayant des propriétés similaires au compost, destinée à la récupération, et la fraction surdimensionnée avec une taille de grain >20 mm, destinée à être mise en décharge, est séparée du compost stabilisé obtenu.

2. Le procédé selon la revendication 1, **caractérisé en ce que** dans le processus de bioséchage, l'aération est continue ou intermittente.

3. Le procédé selon la revendication 1, **caractérisé en ce que** dans le processus de biostabilisation, l'aération est continue ou intermittente.
